# EUROPÄISCHE PATENTANMELDUNG

(11) **EP 2 792 569 A2**
(43) Veröffentlichungstag der Anmeldung: **22.10.2014**
(21) Anmeldenummer: 14164473.2
(22) Anmeldetag: 11.04.2014
(51) Int. Cl.: B61D 17/10

(54) **Montagevorrichtung, Verfahren zum Befestigen von plattenförmigen Elementen, und Schienenfahrzeug mit plattenförmigen Elementen**

(30) Priorität: 15.04.2013 DE 102013103772
(71) Anmelder: Bombardier Transportation GmbH, 10785 Berlin (DE)
(72) Erfinder: Obst, Matthias, 02827 Görlitz (DE); Reisert, Bernd, 02625 Bautzen (DE); Salomo, Heiner, 02923 Kodersdorf (DE); Bittner, Ralf, 02827 Görlitz (DE); Kittelmann, Thomas, 02748 Bernstadt OT Dittersbach (DE)
(74) Vertreter: Zimmermann & Partner

(57) **Zusammenfassung**

Es wird eine Montagevorrichtung vorgeschlagen, welche eine leichte Montage ermöglicht. Die Montagevorrichtung umfasst wenigstens ein Hohlprofil (3) mit wenigstens einem Längsschlitz (10) in Längsrichtung des Hohlprofils (3), und wenigstens ein Verbindungselement (20) zum Einfügen in das Hohlprofil (3). Das Verbindungselement (20) umfasst wenigstens zwei Befestigungselemente (1) und einen Träger (2) zur Aufnahme der Befestigungselemente (1), wobei die Befestigungselemente (1) am Träger (2) festlegbar sind.

## Beschreibung

### Technisches Gebiet

Die Erfindung betrifft eine Montagevorrichtung insbesondere zum Befestigen von plattenförmigen Elementen. Weiterhin betrifft die Erfindung ein Verfahren zum Befestigen von plattenförmigen Elementen, sowie ein Schienenfahrzeug mit plattenförmigen Verkleidungselementen.

### Vorbekannter Stand der Technik

Im Schienenfahrzeugbau, sowie in anderen Bereichen, ist es erforderlich, plattenförmige Elemente an Grundgerüste oder Wagenrohbauten zu befestigen. Eine Möglichkeit dazu ist die Verwendung von Hohlprofilen, wie in den Anmeldungen DE 10 2010 036 516, DE 10 2010 036 515 und DE 10 2010 036 517 beschrieben. Derartige Hohlprofile mit darin eingelegten Nutensteinen gestatten ein nachjustierbare und lösbare Befestigung. Die Nutensteine müssen dazu in die als C-Profil ausgebildeten Hohlprofile eingekippt, eingedreht oder seitlich eingesteckt werden.

Darüber hinaus finden Mehrfachnutensteine, beispielsweise Nutenschienen, mit toleriert beabstandeten Gewindebohrungen Verwendung. Weiterhin sind Lösungen wie Einniet- oder Käfigmuttern zum Befestigen von plattenförmigen Elementen bekannt.

Die DE 31 15 699 C2 beschreibt einen Fußboden eines Schienenfahrzeugs, bei dem Hohlprofile zur Befestigung von Sitzen verwendet werden.

### Nachteile des Standes der Technik

Diese Lösungen weisen den Nachteil auf, dass die Befestigungselemente während der Montage an ihrer Position gehalten werden müssen. Das bedingt eine Zugänglichkeit der Befestigungselemente während der Montage. Besonders in vertikalen C-Schienen bei der Verwendung von Nutensteinen gestaltet sich dies als schwierig. Die Nutensteine müssen durch beispielsweise eine Madenschraube in Position gehalten werden, um das zu befestigenden Element mit dem Nutenstein zu verbinden.

Montageelemente wie Einniet- oder Käfigmuttem weisen den Nachteil auf, dass die exakte Position schon vor der Montage festgelegt werden muss. Die Möglichkeit des Toleranzausgleiches ist damit nur bedingt gegeben.

### Problemstellung

Es ist daher Aufgabe der vorliegenden Erfindung, eine Montagevorrichtung bereitzustellen, welche eine erleichterte Montage ermöglicht.

### Erfindungsgemäße Lösung

Diese Aufgabe wird gelöst durch eine Montagevorrichtung nach Anspruch 1. Weiterhin wird diese Aufgabe durch ein Verfahren nach Anspruch 10 gelöst. Weiterhin wird diese Aufgabe durch ein Schienenfahrzeug nach Anspruch 12 gelöst. Weitere Ausführungsformen, Modifikationen und Verbesserungen ergeben sich anhand der folgenden Beschreibung und der beigefügten Ansprüche.

Gemäß einer Ausführungsform wird eine Montagevorrichtung, bereitgestellt. Die Montagevorrichtung umfasst wenigstens ein Hohlprofil mit wenigstens einem Längsschlitz in Längsrichtung des Hohlprofils, und wenigstens ein Verbindungselement zum Einfügen in das Hohlprofil. Das Verbindungselement umfasst wenigstens zwei Befestigungselemente und einen Träger zur Aufnahme der Befestigungselemente, wobei die Befestigungselemente am Träger festlegbar sind.

Mittels des Trägers können die Befestigungselemente beispielsweise geeignet zueinander beabstandet gehalten werden und somit bereits in eine gewünschte Montageposition gebracht werden. So kann beispielsweise der Abstand der Befestigungselemente voneinander je nach Bedarf eingestellt werden, sodass dann bereits eine gewünschte Vorjustage der Befestigungselemente bezüglich eines am Hohlprofil zu befestigenden Elements, beispielsweise eines plattenförmigen Elements, gegeben ist. Dies erleichtert die Montage des zu befestigenden Elements. Weist das plattenförmige Element beispielsweise eine Bohrrasterung auf, durch welche Befestigungsmittel zum Eingriff mit den Befestigungselementen gebracht werden sollen, so können die Befestigungselemente mittels des Trägers bereits auf diese Rasterung eingestellt werden.

Im Vergleich zu beispielsweise durchgehenden Nutenschienen, die definiert beabstandete Innengewinde aufweisen, hat die hier beschriebene Lösung mehrere Vorteile. Zum einen ist die Masseersparnis zu erwähnen, da das Verbindungselement aus Träger und Befestigungselementen im Vergleich zu einer durchgehenden massiven Nutenschiene deutlich leichter ausgeführt werden kann. Insbesondere können als Befestigungselemente einzelne Nutensteine mit beispielsweise jeweils einem Innengewinde verwendet werden, die mittels des Trägers geeignet beabstandet werden. Das hier beschriebene Verbindungselement kann daher auch als Verbundnutenschiene bezeichnet werden. Dabei liegt es im Rahmen der Erfindung, dass Träger und Befestigungselemente aus unterschiedlichen Materialien bestehen, die an ihre jeweilige Funktion entsprechend angepasst sind. Da die Befestigungselemente die eigentliche Befestigungsfunktion ausüben, werden diese typischerweise aus Metall hergestellt. Der Träger kann dagegen aus Kunststoff sein.

Zum anderen ist es möglich, das Verbindungselement leicht an verschiedene Montagegegebenheiten durch beispielsweise Verschieben der einzelnen Befestigungselemente anzupassen. So kann das Verbindungselement aus immer einem gleich aufgebauten Träger und beispielsweise mehreren gleichen Befestigungselementen selbst zum Befestigen von Elementen bestehen, die eine unterschiedliche Rasterung verlangen. Die Befestigungselemente müssen lediglich gemäß der vorgegebenen Rasterung im oder am Träger festgelegt werden.

Darüber hinaus ist es möglich, die Länge des Verbindungselements leicht an die jeweiligen Montagegegebenheiten anzupassen. Dazu kann der Träger entsprechend gekürzt werden. Dies ist insbesondere dann leicht möglich, wenn als Träger eine Profilschiene verwendet wird und/oder der Träger aus einem Kunststoffmaterial besteht. Ein Kürzen von massiven durchgehenden Nutenschienen, die typischerweise aus Metall bestehen, ist dagegen nur mit Aufwand möglich.

Weiterhin gestattet die hier vorgestellte Lösung einen Austausch von einzelnen Befestigungselementen im Schadensfall.

Das Verbindungselement wird typischerweise mit seinem Träger und den am oder im Träger festgelegten Befestigungselementen in das Hohlprofil eingeführt. Der Träger liegt daher im montierten Zustand zusammen mit den Befestigungselementen im Hohlprofil. Das Verbindungselement wird damit vollständig in das Hohlprofil eingeführt. Der im Hohlprofil eingelegte Träger ist im Hohlprofil verschiebbar.

Der Träger kann aus einem elastischen oder flexiblen Material bestehen. Dies erleichtert die Handhabung, insbesondere beim Einführen des Verbindungselements in das Hohlprofil in schwer zugänglichen Bereichen. So ist es beispielsweise möglich, das Verbindungselement durch eine einzelne Öffnung des Hohlprofils einzufädeln. Bei der Öffnung kann es sich um eine seitliche Öffnung des beispielsweise als Strangpressprofils ausgebildeten Hohlprofils oder auch um eine speziell zum Einfädeln vorgesehene Öffnung im Bereich des Längsschlitzes handeln. Beispielsweise kann eine lokale Verbreiterung des Längsschlitzes zum Einfädeln des Verbindungselements vorgesehen sein. Alternativ ist es möglich, den Träger im Wesentlichen starr auszubilden, beispielsweise in Form einer Profilschiene oder eines massiven Kunststoffträgers.

Der Längsschlitz kann sich entlang des gesamten Hohlprofils erstrecken. Es ist auch möglich, mehrere Längsschlitze vorzusehen, die zueinander fluchtend und in Längsrichtung des Hohlprofils voneinander beabstandet verlaufen. Dadurch wird die mechanische Stabilität des Hohlprofils verbessert.

Die Befestigungselemente können bevorzugt vom Träger aufgenommen werden, wobei die Befestigungselemente an der offenen Seite des Trägers zugänglich sind. Das so gebildete Verbindungselement muss daher lagerichtig in das Hohlprofil eingeführt werden, damit die Befestigungselemente an der zum Längsschlitz weisenden Seite des Verbindungselements zum Liegen kommen.

Grundsätzlich ermöglicht die hier beschriebene Montagevorrichtung eine leichte Anpassbarkeit an verschiedene Montagegegebenheiten, wie beispielsweise Länge und Rasterung einer Verbindung, bei Verwendung von an sich gleichen Grundkomponenten (Träger, Befestigungselement) sowie eine Vorjustage der einzelnen Befestigungselemente. Insgesamt ergibt sich damit eine erleichterte Montage.

Gemäß einer Ausführungsform kann der Träger so ausgestaltet sein, dass die Befestigungselemente in den Träger einlegbar oder einsteckbar sind.

Gemäß einer Ausführungsform sind dabei die Befestigungselemente am oder im Träger in Längsrichtung des Trägers frei verschiebbar. Dies ist gemäß einer Ausführungsform beispielsweise durch Verwendung einer einseitig offenen Profilschiene als Träger möglich. In der Profilschiene können die Befestigungselemente geeignet festlegbar sein. Die Profilschiene kann aus einem Kunststoffmaterial bestehen. Es ist auch möglich, die Profilschiene aus einem Metall, beispielsweise Aluminium, in Form eines Strangpressprofils herzustellen.

Gemäß einer Ausführungsform sind die Befestigungselemente am oder im Träger mittels einer im Träger vorhandenen Rasterung versetzbar. Die Rasterung im Träger kann dazu an die für die Montage erforderliche Rasterung angepasst sein. In einer Weiterbildung ist es möglich, die Rasterung sehr feinstufig vorzusehen, so dass die Befestigungselemente ebenfalls sehr feinstufig versetzt werden können und daher deren Abstand an unterschiedliche Montagerasterungen, die dann ein Vielfaches der Rasterung des Trägers entsprechen, angepasst werden kann.

Gemäß einer Ausführungsform weist der Träger Rückhalteelemente zum Festlegen der Befestigungselemente auf. Die Rückhalteelemente dienen dazu, die Befestigungselemente ausreichend sicher am Träger zu fixieren und ein versehentliches Lösen zu verhindern. Die Rückhalteelemente können so ausgebildet sein, dass sie ein lösbares Festlegen der Befestigungselemente gestatten.

Beispielsweise kann der Träger so ausgeformt sein, dass er formschlüssig oder zumindest teilweise formschlüssig die Befestigungselemente aufnimmt, wobei diese zumindest auf einer Seite des Trägers freiliegen. Dadurch ist der Zugang zu den Befestigungselementen gewährleistet.

Die Rückhalteelemente können auch als elastische Elemente und/oder Rastelemente ausgebildet werden.

Gemäß einer Ausführungsform weisen die Befestigungselemente jeweils wenigstens ein Innengewinde auf, dessen Gewindeachse senkrecht zur Längserstreckung des Trägers verläuft. In das Innengewinde kann dann ein Befestigungsmittel, beispielsweise eine Schraube, eingreifen und somit eine lösbare Verbindung herstellen. Typischerweise werden als Befestigungselemente einzelne Nutensteine mit jeweils einem, beispielsweise zentral angeordneten Innengewinde verwendet. Die Nutensteine werden dann mittels des Trägers geeignet beabstandet gehalten.

Gemäß einer Ausführungsform weist die Montagevorrichtung daher lösbare Befestigungsmittel auf, welche durch die Längsschlitze hindurch in Eingriff mit den jeweiligen Befestigungselementen bringbar sind.

Gemäß einer Ausführungsform weist das Verbindungselement mindestens ein, vorzugsweise mindestens zwei Federelemente zum temporären Fixieren des Verbindungselements im Hohlprofil auf. Das oder die Federelemente halten das Verbindungselement innerhalb des Hohlprofils in einer gewünschten Montageposition. Die Federelemente können dabei so ausgebildet sein, dass sie ein Verrutschen des Verbindungselements sicher vermeiden können. Von Vorteil ist dies insbesondere bei vertikal angeordneten Hohlprofilen. Insgesamt wird dadurch die Montage deutlich vereinfacht.

Gemäß einer Ausführungsform ist das oder sind die Federelemente auf der vom Längsschlitz abgewandten Seite des Verbindungselements am Träger angeordnet. Die Federelemente stützen sich somit gegen die dem Längsschlitz gegenüberliegende Innenfläche des Hohlprofils ab. Damit wird gleichzeitig gewährleistet, dass das Verbindungselement in Richtung zum Längsschlitz gedrückt wird, sodass das Verbindungselement damit leichter zugänglich ist. Es ist jedoch auch möglich, dass sich die Federelemente gegen andere Innenflächen des Hohlprofils abstützen. Die Federelemente können sich dabei gegen eine, zwei oder sogar drei Innenflächen abstützen.

Gemäß einer Ausführungsform wird ein Verfahren zum Befestigen von plattenförmigen Elementen bereitgestellt. Dabei wird zunächst ein Rohbau oder ein tragendes Element mit einem Hohlprofil bereitgestellt, welches zumindest einen Längsschlitz in Längsrichtung des Hohlprofils aufweist. Das Hohlprofil kann beispielsweise integral mit dem Rohbau ausgebildet sein. Alternativ ist es möglich, das Hohlprofil am Rohbau oder am tragenden Element zu befestigen.

Weiterhin wird ein Verbindungselement in das Hohlprofil eingefügt, beispielsweise seitlich in das Hohlprofil eingeschoben, wobei das Verbindungselement wenigstens zwei Befestigungselemente und einen Träger zur Aufnahme der Befestigungselemente aufweist. Ein plattenförmiges Element wird am Hohlprofil mittels Befestigungsmittel befestigt, die in Eingriff mit den Befestigungselementen des Verbindungselements gebracht werden und dabei das plattenförmige Element auf das Hohlprofil drücken. Das plattenförmige Element wird somit festgeklemmt.

Gemäß einer Ausführungsform umfasst das Verbindungselement mindestens ein Federelement auf. Mittels des Federelements wird das Verbindungselement im Hohlprofil in einer zur Montage des plattenförmigen Elements erforderlichen Position gehalten, sodass eine Vorjustage des Verbindungselements gewährleistet ist.

Gemäß einer Ausführungsform erfolgt somit die Montage von im Wesentlichen einseitig zugänglichen und lösbaren Befestigungselementen, insbesondere von Nutensteinen, die bei der Montage an einer vorbestimmten Position gehalten werden.

Gemäß einer Ausführungsform wird ein Schienenfahrzeugwagen bereitgestellt, der einen Wagenkastenrohbau und mindestens ein plattenförmiges Verkleidungselement aufweist, wobei das plattenförmige Verkleidungselement mittels einer Montagevorrichtung am Wagenkastenrohbau befestigt ist. Die vorstehend beschriebene Montagevorrichtung eignet sich insbesondere zum Befestigen von plattenförmigen Verkleidungselementen, insbesondere im Innenausbau von Schienenfahrzeugwagen. Bei den plattenförmigen Verkleidungselementen kann es sich insbesondere um Fußbodenplatten, Seitenplatten und Deckplatten handeln. Derartige Verkleidungselemente sind vergleichsweise groß und schwer. Die Montageeinrichtung erleichtert den Einbau solcher Elemente, da sie eine Vorjustage des Verbindungselements unter ggf. gleichzeitiger temporärer Fixierung des Verbindungselements ermöglicht. Von Vorteil ist weiterhin, dass das Verbindungselement im Vergleich mit einer durchgehenden massiven Nutenschiene deutlich leichter ausgeführt werden kann. Dies erleichtert nicht nur die Montage, sondern stellt auch einen Gewichtsgewinn für den Schienenfahrzeugwagen dar.

Im Rahmen der Erfindung wird damit eine Montagevorrichtung für Befestigungselemente beschrieben, bei dem die vorzugsweise mit einem Gewinde versehenen Befestigungselemente, die durch einen elastischen oder unelastischen Träger, lösbar oder unlösbar, beabstandet bzw. mittels einer Rasterung oder frei verschiebbar miteinander verbunden sind, eine toleranzausgleichende Montage von Komponenten oder Elementen ermöglichen. Die Montage kann dabei z.B. an einem C-Profil auch ohne vorherige aufwendige Positionierung und Fixierung der Befestigungselemente im C-Profil erfolgen, da die Befestigungselemente mittels des Trägers geeignet in Position gehalten werden. Zusätzlich können die Befestigungselemente durch ein Federelement oder ein federndes Konstruktionselement, welches im Träger integriert sein kann, in der zur Montage erforderlichen Position gehalten werden.

Es liegt im Rahmen der Erfindung, einzelne Hohlprofile oder mehrere, ggf. integral miteinander verbundene und parallel zueinander verlaufende Hohlprofile zu verwenden, wobei jedes Hohlprofil wenigstens ein Verbindungselement umfasst. Beispiele sind Einfach-C-Profile und Doppel-C-Profile. Die Hohlprofile können gleichzeitig die Funktion einer Abstützfläche für das plattenförmige Element oder die plattenförmigen Elemente übernehmen. Dabei wird das jeweilige plattenförmige Element auf die Abstützfläche gepresst und durch Klemmwirkung festgelegt. Ein Toleranzausgleich bzw. ein Verschieben des jeweiligen plattenförmigen Elements ist dabei vor dessen Festlegung möglich.

Die vorgeschlagene Montagevorrichtung ist insbesondere in Schienenfahrzeugwagen mit Fahrgasträumen im Personennah- und Regionalverkehr sowie Personenfern- und Hochgeschwindigkeitsverkehr einsetzbar.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.
Figuren 1A bis 1D zeigen eine Montagevorrichtung gemäß einer ersten Ausführungsform.
Figuren 2A bis 2D zeigen eine Montagevorrichtung gemäß einer zweiten Ausführungsform.
Figuren 3A bis 3D zeigen eine Montagevorrichtung gemäß einer dritten Ausführungsform.
Figuren 4A und 4B zeigen eine Montagevorrichtung gemäß einer vierten Ausführungsform.

### Ausführungsbeispiele

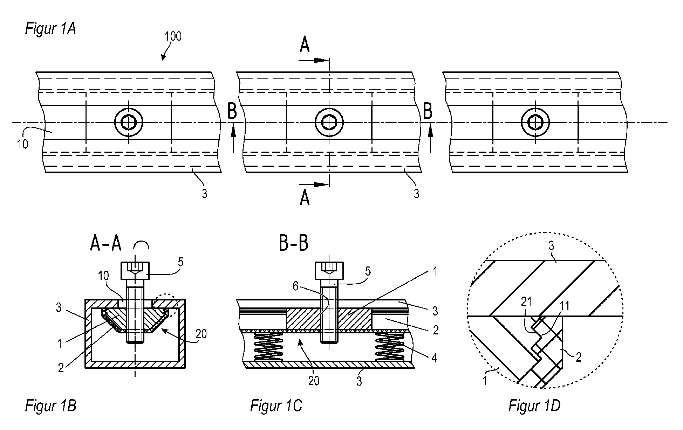

Figur 1A zeigt eine Draufsicht auf eine Montagevorrichtung 100. Die Montagevorrichtung 100 umfasst ein Hohlprofil 3 mit einem hier in Längsrichtung des Hohlprofils 3 durchgehenden Längsschlitz 10. Im Querschnitt ist das Hohlprofil 3 in dieser Ausführungsform als C-Profil ausgebildet, wie aus Figur 1B ersichtlich, welche einen Schnitt entlang der Linie A-A in Figur 1A zeigt.

Die Montagevorrichtung umfasst weiterhin ein Verbindungselement 20, das in das Hohlprofil 3 einführbar und darin verschiebbar ist. In Figur 1B ist das Verbindungselement 20 im Querschnitt dargestellt. Das Verbindungselement 20 umfasst einen Träger 2 sowie ein, zwei oder mehrere Befestigungselemente 1, welche am oder im Träger 2 festlegbar sind.

Der Träger 2 ist in der hier gezeigten Ausführungsform als Profilschiene, beispielsweise aus einem Kunststoff, ausgebildet. Die Profilschiene weist ein einseitig offenes Querschnittsprofil auf, in welches die Befestigungselemente 1 an beliebiger Stelle einsetzbar sind. Das Querschnittsprofil des Trägers 2 verjüngt sich stufenweise oder kontinuierlich von seinem offenen Ende zu seinem geschlossenen Ende, sodass ein Einsetzen der Befestigungselemente 1 senkrecht zur Längserstreckung des Trägers 2 möglich ist.

Als Befestigungselemente 1 werden in der hier gezeigten Ausführungsform Nutensteine mit Innengewinde verwendet. Die Nutensteine 1 werden in den Träger 2 eingelegt. Der Träger 2 kann ein Strangpressprofil sein und vor der Montage leicht auf die benötigte Länge gekürzt werden. Dann wird die erforderliche Anzahl der Nutensteine 1 in den Träger 2 eingesetzt und nach Maßgabe der Montagegegebenheiten geeignet beabstandet platziert. Dazu ist es möglich, die Nutensteine 1 im Träger 2 in Längsrichtung desselben zu verschieben.

Die Nutensteine 1 stellen hier einseitig zugängliche und lösbare Befestigungselemente dar. Da die Nutensteine 1 im Träger 2 aufgenommen sind, ist weiterhin eine Vororientierung des Einbaus des Verbindungselements gegeben, die bei der Montage berücksichtigt werden muss.

Im Schnitt quer zur Längserstreckung gesehen kann der Innenquerschnitt des Trägers 2 dem Außenquerschnitt der Nutensteine 1 entsprechen, so dass die Nutensteine formschlüssig im Träger aufgenommen sind.

Der Träger 2 weist weiterhin Rückhalteelemente 21 auf. Diese sind in Figur 1D dargestellt, welche einen Ausschnitt aus dem Querschnitt längs der Linie A-A zeigt. Der Ausschnitt ist in Figur 1B durch eine gestrichelte Linie angedeutet. In der hier gezeigten Ausführungsform werden die Rückhalteelemente 21 durch Rillen oder Furchen gebildet, die an der Innenseite des Trägers 2, d.h. an der Innenseite der Profilschiene in der vorliegenden Ausführungsform, in Längsrichtung des Trägers 2 verlaufen. Dies ermöglicht ein freies Verschieben der Nutensteine 1.

Die Nutensteine 1 (Befestigungselemente) können ihrerseits Rückhalteelemente 11 aufweisen, die zu den Rückhalteelementen 21 des Trägers 2 korrespondieren und in diese eingreifen. Beim Einlegen der Nutensteine 1 in den Träger 2 wird der Träger 2 leicht aufgebogen und schnappt dann in seine ursprüngliche Querschnittsform wieder zurück, wenn die Rückhalteelemente 11, 21 in Eingriff stehen. Zu diesem Zweck ist es günstig, wenn der Träger 2 eine gewisse Elastizität aufweist. Im Ergebnis werden die Nutensteine 1 durch Formschluss der zusammenwirkenden Rückhalteelemente 11, 21 im Träger 2 verschiebbar festgelegt.

Wie in Figur 1C gezeigt, welche einen Schnitt längs der Linie B-B aus Figur 1A darstellt, weist das Verbindungselement 20 weiterhin Federelemente 4 auf, die an der Rückseite des Trägers 2 angeordnet sind und sich gegen die dem Längsschlitz 10 gegenüberliegende Innenfläche des Hohlprofils 3 abstützen. Dadurch wird das Verbindungselement 20 gegen die in Figur 1C obere Innenfläche des Hohlprofils 3 gedrückt und somit im Hohlprofil 3 festgelegt. Ein Verschieben des Verbindungselements 20 ist trotzdem weiterhin möglich.

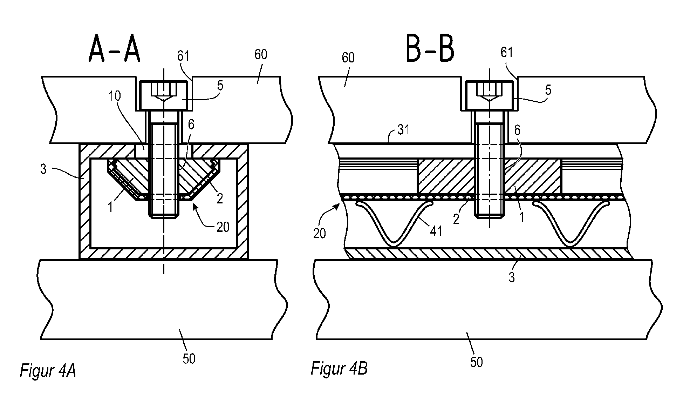

Die Federelemente 4 sind hier als Spiralfedern ausgeführt. Alternativ können die Federelemente auch Blattfedern oder andere elastische Elemente sein. Blattfedern sind in Figur 4B gezeigt. Die Federelemente 4 halten das Verbindungselement 20 in der gewünschten Montageposition.

Die Federelemente 4 können integral mit dem Träger 2 ausgebildet sein. So können die Federelemente 4 ebenfalls aus Kunststoff bestehen. Alternativ ist es möglich, die Federelemente separat zum Träger bereitzustellen und erst vor Ort mit dem Träger zusammenzubringen, beispielsweise beim Einsetzen des Verbindungselements in das Hohlprofil.

Jeder Nutenstein 1 weist ein Innengewinde 6 auf, dessen Gewindeachse senkrecht zum Verbindungselement 20 verläuft. Die Innengewinde 6 sind über den Längsschlitz 10 für Befestigungsmittel 5, in der vorliegenden Ausführungsform Schrauben 5, zugänglich. Mittels der Befestigungsmittel 5 wird ein zu haltendes Element, typischerweise ein plattenförmiges Element, am Hohlprofil 3 festgelegt.

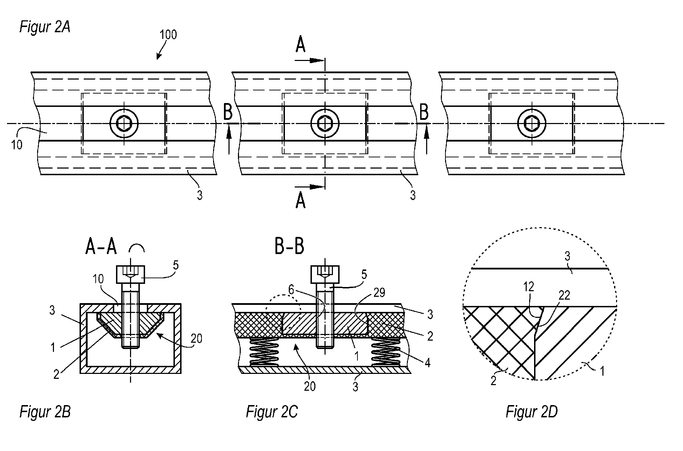

Mit Bezug auf Figur 2 wird eine zweite Ausführungsform beschrieben. Einander entsprechende Teile sind mit den gleichen Bezugszeichen versehen. Figur 2A zeigt hier ebenfalls eine Draufsicht auf die Montagevorrichtung, Figur 2B einen Schnitt entlang der Linie A-A, Figur 2C einen Schnitt entlang der Linie B-B, und Figur 2D einen vergrößerten Ausschnitt aus Figur 2C.

Die Montagevorrichtung 100 in der zweiten Ausführungsform weist im Wesentlichen den gleichen Aufbau wie die Montagevorrichtung der ersten Ausführungsform auf. Daher wird auf eine Wiederholung der Beschreibung verzichtet. Im Unterschied zur ersten Ausführungsform ist der Träger hier nicht als Hohlprofilschiene ausgeführt, sondern als durchgehende Vollprofilschiene, wobei Aussparungen 29 vorgesehen sind, in welche die Befestigungsmittel 1, die hier ebenfalls von einzelnen Nutensteinen gebildet werden, eingesetzt werden können.

Der Träger 2 umfasst typischerweise eine Vielzahl von Aussparungen 29, welche beispielsweise mit gleichem Abstand zwischen benachbarten Aussparungen angeordnet sein können. Damit wird eine Rasterung zum Versetzen der Nutensteine 1 vorgegeben.

Um ein Herausfallen der Nutensteine 1 zu verhindern, weist der Träger 2 Rückhalteelemente 22 auf; hier in Form von leicht schräg verlaufenden Flächen, die gegenüber der Senkrechten auf dem Träger 2 geneigt und einander zugewandt sind. Die Nutensteine 1 weisen entsprechende Anschlagflächen 12 als korrespondierende Rückhalteelemente auf. Die Form der Aussparungen 29 kann im Wesentlichen der Form der Nutensteine 1 entsprechen. Mittels Formschluss zwischen den Anschlagflächen 12 und den Rückhalteelementen 22 werden die Nutensteine 1 sicher in den Aussparungen 29 gehalten.

Auch bei der zweiten Ausführungsform ist eine gewisse Flexibilität oder elastische Nachgiebigkeit des Materials des Trägers 2 für das Einsetzen der Nutensteine 1 von Vorteil. Als Material kommt hier insbesondere Kunststoff in Betracht.

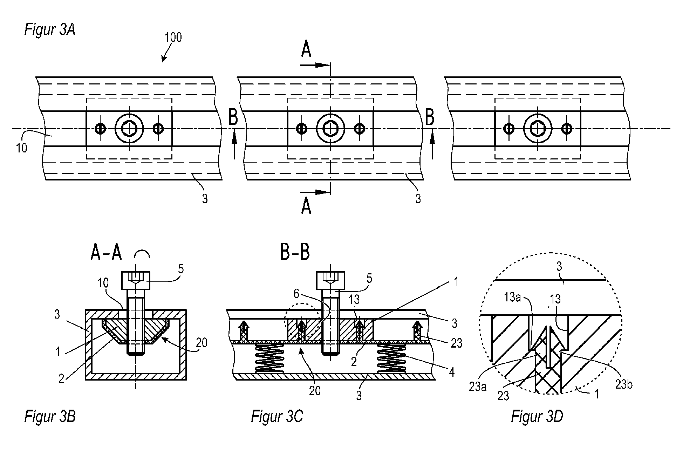

Mit Bezug auf Figur 3 wird eine dritte Ausführungsform beschrieben. Einander entsprechende Teile sind mit den gleichen Bezugszeichen versehen. Figur 3A zeigt hier ebenfalls eine Draufsicht auf die Montagevorrichtung, Figur 3B einen Schnitt entlang der Linie A-A, Figur 3C einen Schnitt entlang der Linie B-B, und Figur 3D einen vergrößerten Ausschnitt aus Figur 3C.

Die Montagevorrichtung 100 der dritten Ausführungsform weist im Wesentlichen den gleichen Aufbau wie die Montagevorrichtung der ersten Ausführungsform auf. Daher wird auf eine Wiederholung der Beschreibung verzichtet. Der Träger 2 des Verbindungselements 20 ist hier wieder in Form einer Hohlprofilschiene, beispielsweise aus Kunststoff, ausgebildet. Als Rückhalteelemente 23 dienen hier Rastelemente, welche sich im Querschnitt des Trägers 2 vom geschlossenen Profilende zum offenen Profilende erstrecken. Wie in Figur 3D vergrößert dargestellt, umfasst jedes Rastelement 23 zwei Rastarme 23a, 23b, welche in entsprechende Rückhalteelemente 13 des Nutensteins 1 eingreifen. Dazu weist jeder Nutenstein 1 ein oder zwei Rückhalteelemente 13 auf. Diese werden hier jeweils durch eine Durchgangsbohrung mit einer Stufe 13a gebildet, hinter welcher die Rastarme 23a, 23b eingreifen und so den Nutenstein 1 festhalten.

Die Rastelemente 23 sind mit gleichem Abstand zwischen benachbarten Rastelementen entlang der Längserstreckung des Trägers 2 angeordnet und bilden so eine Rasterung. Jeder Nutenstein 1 weist in der hier gezeigten Ausführungsform jeweils zwei Durchgangsbohrungen 13 auf, welche einen der Rasterung der Rastelemente 23 entsprechenden Abstand zueinander haben. Die Nutensteine 1 können somit um den Abstand zweier benachbarter Rastelemente 23 stufenweise versetzt werden.

In den Figuren durchsetzen die Schrauben 5 den jeweiligen Träger 2. Dazu können entsprechende Öffnungen im Träger 2 vorgesehen sein. Dies ist insbesondere bei den Ausführungsbeispielen mit Rasterung möglich, da hier die Lage der Nutensteine 1 vordefiniert ist. Sind die Nutensteine 1 frei verschiebbar, wie im Ausführungsbeispiel der Figuren1A bis 1D, können die Schrauben 5, sofern sie vollständig eingeschraubt sind und dann an der Unterseite der Nutensteine hervorstehen, den Träger dort leicht verbiegen. Dies ist unkritisch, da der Träger 2 nur zur Vorausrichtung und temporären Halterung der Nutensteine 1 dient.

Beispielsweise kann der Träger 2 aus Schaumstoff oder einem weichen, gummiartigen Material bestehen. Dann können sich die Schrauben 5 entweder in das Material einbohren oder es leicht auswölben.

Grundsätzlich ist es auch möglich, den Träger 2 so auszugestalten, dass unterhalb der Nutensteine 1 ausreichend Platz für die Schrauben 5 verbleibt. Beispielsweise kann eine zentrale Nut in Längsrichtung des Trägers 2 dazu vorgesehen werden. Eine solche Nut ist auch dort von Vorteil, wo die Schrauben 5 den Träger 2 auswölben, da durch eine Nut das Material des Trägers 2 geschwächt wird und dann dort leichter ausgewölbt werden kann. Anstelle einer einzigen durchgehenden Nut können auch mehrere Nuten hintereinander in Längsrichtung vorgesehen werden, zwischen denen Querstege verbleiben.

Es ist weiterhin möglich, die Länge der Schrauben und/oder Dicke der Nutensteine 1 so anzupassen, dass die Schrauben 5 nicht aus den Nutensteinen 1 herausragen, wenn sie eingeschraubt sind.

Mit Bezug zu Figuren 4A und 4B wird eine vierte Ausführungsform beschrieben. Einander entsprechende Teile sind mit den gleichen Bezugszeichen versehen. Figur 4A zeigt einen Querschnitt und Figur 4B einen Längsschnitt durch eine Montageeinrichtung.

Die Montageeinrichtung 100 der vierten Ausführungsform entspricht im Wesentlichen der Montageeinrichtung gemäß erster Ausführungsform mit dem Unterschied, dass hier Blattfedern 41 als Federelemente verwendet werden.

Figuren 4A und 4B zeigen weiterhin die Verwendung der Montageeinrichtung 100 zum Befestigen von plattenförmigen Elementen, hier konkret am Beispiel von Fußbodenplatten 60 eines Schienenfahrzeugwagens. Anstelle von Fußbodenplatten können auch andere plattenförmige Verkleidungselemente mittels der Montageeinrichtung befestigt werden. Besonders vorteilhaft gestaltet sich die Befestigung an vertikal verlaufenden Hohlprofilen, da das eingelegte Verbindungselement leicht in die gewünschte Montageposition gebracht und dort mittels der Federelemente sicher gehalten werden kann. Im Fall waagerecht verlaufender Hohlprofile wird das eingelegte Verbindungselement in Richtung zum Längsschlitz gedrückt und ist damit leicht zugänglich.

Das Hohlprofil 3 der Montageeinrichtung 100 ist hier auf einem tragenden Element 50 befestigt. Das tragende Element 50 kann Teil eines Wagenkastenrohbaus des Schienenfahrzeugwagens sein. Grundsätzlich sind verschiedene Befestigungsmöglichkeiten für das Hohlprofil 3 am tragenden Element 50 denkbar. Die Verbindung kann beispielsweise, wie hier dargestellt, durch eine, eine gewisse Elastizität aufweisende Klebung erfolgen. Dadurch wird zum einen eine Schwingungsdämpfung ermöglicht und zum anderen ein gewisser Höhenausgleich erreicht. Alternativ kann das Hohlprofil 3 auf dem Wagenkastenrohbau ggf. mit Höhenausgleich festgeschraubt sein oder anderweitig geeignet befestigt werden. Das Hohlprofil 3 bildet hier eine Fußbodenschiene.

Auf der Oberseite des Hohlprofils 3, an welcher der Längsschlitz 10 verläuft, ist eine Fußbodenplatte 60 mit Bohrungen 61 aufgelegt. Die Fußbodenplatte 60 wird mittels Schrauben 5, welche durch die Bohrungen 61 in die Innengewinde 6 der Nutensteine 1 eingreifen, auf die Oberseite des Hohlprofils 3 gedrückt. Die Oberseite des Hohlprofils 3 bildet hier eine Abstützfläche 31 für die Fußbodenplatte 60.

Zur Montage wird das Verbindungselement 20 in das Hohlprofil 3 eingeführt und in die zur Montage geeignete Position gebracht. Dabei kann zuvor der Abstand der Nutensteine 1 entsprechend der Montagerasterung, die beispielsweise durch die Bohrungen 61 vorgegeben ist, eingestellt werden. In der ersten und vierten Ausführungsform kann dies durch einfaches Verschieben der Nutensteine 1 erfolgen. Bei der zweiten und dritten Ausführungsform erfolgt dies entsprechend der Rasterung im Träger 2. In diesem Fall muss die Rasterung im Träger 2 mit der Rasterung der Bohrungen 61 übereinstimmen. Alternativ kann die Rasterung im Träger 2 einem ganzzahligen Teiler der Rasterung der Bohrungen 61 entsprechen. Dies ermöglicht eine Anpassung an unterschiedliche Montagerasterungen, die sich jedoch als Mehrfaches der Rasterung im Träger 1 ergeben müssen.

Schließlich wird die Fußbodenplatte 60 mit den Schrauben 5 am Hohlprofil 3 befestigt.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

### Bezugszeichenliste

- 1: Befestigungselement / Nutenstein
- 2: Träger
- 3: Hohlprofil
- 4, 41: Federelement
- 5: Befestigungsmittel / Schraube
- 6: Innengewinde
- 10: Längsschlitz
- 11, 12, 13: Rückhalteelemente
- 13a: Stufe
- 20: Verbindungselement
- 21, 22, 23: Rückhalteelemente
- 23a, 23b: Rastarme
- 31: Abstützfläche
- 50: tragendes Element / Wagenkastenrohbau
- 60: Fußbodenplatte
- 61: Bohrung
- 100: Montagevorrichtung

## Patentansprüche

1. Montagevorrichtung, aufweisend:
- wenigstens ein Hohlprofil (3) mit wenigstens einem Längsschlitz (10) in Längsrichtung des Hohlprofils (3), und
- wenigstens ein Verbindungselement (20) zum Einfügen in das Hohlprofil (3),
**dadurch gekennzeichnet, dass** das Verbindungselement (20) wenigstens zwei Befestigungselemente (1) und einen Träger (2) zur Aufnahme der Befestigungselemente (1) aufweist, wobei die Befestigungselemente (1) am Träger (2) festlegbar sind.

2. Montagevorrichtung nach Anspruch 1, **dadurch gekennzeichnet, dass** die Befestigungselemente (1) am oder im Träger (2) in Längsrichtung des Trägers (1) frei verschiebbar sind.

3. Montagevorrichtung nach Anspruch 1, **dadurch gekennzeichnet, dass** die Befestigungselemente (1) am oder im Träger (2) mittels einer im Träger (2) vorhandenen Rasterung versetzbar sind.

4. Montagevorrichtung nach einem der Ansprüche 1 bis 3, **dadurch gekennzeichnet, dass** der Träger (2) Rückhalteelemente (21) zum Festlegen der Befestigungselemente (1) aufweist.

5. Montagevorrichtung nach einem der Ansprüche 1 bis 4, **dadurch gekennzeichnet, dass** die Befestigungselemente (1) jeweils wenigstens ein Innengewinde (6) aufweisen, dessen Gewindeachse senkrecht zur Längserstreckung des Trägers (2) verläuft.

6. Montagevorrichtung nach einem der Ansprüche 1 bis 5, **dadurch gekennzeichnet, dass** der Träger (2) eine einseitig offene Profilschiene ist, in welcher die Befestigungselemente (1) festlegbar sind.

7. Montagevorrichtung nach einem der Ansprüche 1 bis 6, **dadurch gekennzeichnet, dass** das Verbindungselement (20) mindestens ein, vorzugsweise mindestens zwei Federelemente (4) zum temporären Fixieren des Verbindungselements (20) im Hohlprofil (3) umfasst.

8. Montagevorrichtung nach Anspruch 7, **dadurch gekennzeichnet, dass** das oder die Federelemente (4) auf der vom Längsschlitz (10) abgewandten Seite des Verbindungselements (20) am Träger (2) angeordnet sind.

9. Montagevorrichtung nach einem der Ansprüche 1 bis 8, weiterhin **gekennzeichnet durch** lösbare Befestigungsmittel (5), welche **durch** die Längsschlitze (10) hindurch in Eingriff mit den jeweiligen Befestigungselementen (1) bringbar sind.

10. Verfahren zum Befestigen von plattenförmigen Elementen, umfassend:
- Bereitstellen eines Rohbau oder eines tragenden Elements mit einem Hohlprofils (3), welches zumindest einen Längsschlitz (10) in Längsrichtung des Hohlprofils (3) aufweist;
- Einfügen eines Verbindungselements (20) in das Hohlprofil (3), wobei das Verbindungselement wenigstens zwei Befestigungselemente (1) und einen Träger (2) zur Aufnahme der Befestigungselemente (1) aufweist;
- Befestigen des plattenförmigen Elements am Hohlprofil mittels Befestigungsmittel (5), die in Eingriff mit den Befestigungselementen (1) gebracht werden und dabei das plattenförmige Element auf das Hohlprofil (3) drücken.

11. Verfahren nach Anspruch 10, wobei das Verbindungselement (20) mindestens ein Federelement (4) aufweist, weiterhin umfassend:
- Festlegen des Verbindungselements (20) im Hohlprofil (3) durch das mindestens eine Federelement (4) in einer zur Montage des plattenförmigen Elements erforderlichen Position.

12. Schienenfahrzeugwagen, aufweisend:
- einen Wagenkastenrohbau; und
- mindestens ein plattenförmiges Verkleidungselement;
wobei das plattenförmige Verkleidungselement mittels mindestens einer Montagevorrichtung nach einem der Ansprüche 1 bis 9 am Wagenkastenrohbau befestigt ist.
